Europäisches Patentamt

European Patent Office

Office européen des brevets

(19)

(11) EP 0 876 028 A2

(12) EUROPEAN PATENT APPLICATION

(43) Date of publication:
04.11.1998 Bulletin 1998/45

(51) Int Cl.⁶: **H04L 9/08**

(21) Application number: 98401016.5

(22) Date of filing: 24.04.1998

(84) Designated Contracting States:
**AT BE CH CY DE DK ES FI FR GB GR IE IT LI LU MC NL PT SE**
Designated Extension States:
**AL LT LV MK RO SI**

(30) Priority: **28.04.1997 NL 1005919**

(71) Applicants:
- **Verheul, Eric Robert**
  **5644 KE Eindhoven (NL)**
- **Van Tilborg, Henk C.A.**
  **5863 LJ Best (NL)**

(72) Inventors:
- **Verheul, Eric Robert**
  **5644 KE Eindhoven (NL)**
- **Van Tilborg, Henk C.A.**
  **5863 LJ Best (NL)**

(74) Representative: **Debay, Yves**
  **Cabinet Yves Debay,**
  **122 Elysée 2**
  **78170 La Celle Saint Cloud (FR)**

(54) **A method for publicly verifiable recovery of Diffie-Hellman, RSA and Rabin related asymmetrical encryption**

(57) The invention relates to a method for key recovery cryptography to be used in a system consisting of:

- two conversation partners who exchange secret information in encrypted form with each other by way of the public telecommunications infrastructure;
- one or more legitimate co-listeners possibly present (for example,a govemment agency, or an employer of the conversation partners), who do have the enciphered information at their disposal, but are not able to decipher it;
- one or more trusted parties (known as Trusted Recovery Parties - TRPs) in principle different from the conversation partners, who act as virtual conversation partners, who can decipher the information, but do not have the enciphered information at their disposal;
- ne or more monitors possibly present for monitoring the exchange between the conversation partners (for example, one of the conversation partners, a PTT or an employer of the conversation partners),

in which the conversation partners as part of the exchange also make the same secret information available to the abovementioned co-listener if the latter acquires cooperation (simultaneously, or with some delay) from one of the TRPs (or several in the event of splitting or sharing techniques being used), in the process the conversation partners also send additional information at the same time, known as binding data, by means of which the monitor can check that said making of information available can also be carried out properly, without the monitor having to have at his disposal secret information. Characteristic of the method is that it relates to an exchange in which the secret information is encrypted with the asymmetrical systems RSA, Rabin or Diffie-Hellman or a combination thereof.

FIG 1/1

```
   Country #1                          Country #2

           Telecommunication inf.

+---------------+  --------------------  +---------------+
| Conversation  |------------------------| Conversation  |
|   part #1     |        |Tap   Tap |    |   part #2     |
+---------------+        |          |    +---------------+
        |                |          |            |
        |                |          |            |
   +---------+           |          |            |
   |  TRP1   |           |          |            |
   +---------+           |          |      +---------+
        |                |          |      |  TRP2   |
        |                |          |      +---------+
        |                |          |            |
+----------------------+ |          | +----------------------+
|    Investigation     | |          | |    Investigation     |
|     service #        | |          | |     service #2       |
+----------------------+            | +----------------------+
```

## Description

## 1 . Introduction

The development of a worldwide information society on the basis of "electronic superhighways" is moving forward at a rapid pace; the increasing interest in the Internet is indicative of this. However, in the case of many applications of the electronic superhighways the reliability of information sent or received is very important. More particularly, it is very important for many applications that:

[confidentiality]    information is not *viewed* on the way by unauthorized persons, for example because it is privacy-sensitive information;

[correctness]    information is not changed on the way by unauthorized persons, for example because it is financial information.

If the information society really does want to get off the ground, it must be possible to guarantee these reliability requirements; a view which is shared by many governments in the world. It is expected that a worldwide data protection infrastructure, known as a public key infrastructure (PKI), will have to be set up. In a PKI public keys are certified by a network of trusted parties (such as, for example, notaries) and are used for asymmetrical encryption (such as RSA). There are countless reasons for stating that governments must be a major party in the realization of PKIs. To mention one: in a certain sense certified public keys are the digital passports of the information society, and the organization of passports is, with good reason, a government task.

However, the methods which protect the confidentiality of information from being viewed by unauthorized parties in principle also provides protection from being viewed by authorized parties, like law enforcement, security and intelligence agencies. When the latter parties, with a court authorization, intercept the communication of a suspect they cannot access the relevant information. In other words, if governments simply promote the development of PKIs, in this way they will also be making life easier for criminals. It is this fact that makes it difficult for governments to promote the provision of public key infrastructures simply as a matter of course.

The question is therefore: how to provide a PKI which promotes confidence among law-abiding citizens and organizations, but does not make life easier for criminals; in other words, as soon as a suspect uses the PKI, the protection offered by the system as regards confidentiality can be given up for law-enforcement, security or intelligence agencies when the latter, with a court authorization, intercept the communication of a suspect. Moreover, removing the protection can also be of importance for other parties having a need and a right to do so. An important condition in the realization of a PKI is that it must also be possible to use the latter from software, and not just from hardware (such as the clipper chip, see [Clip]).

## 2. Prior art

In order to permit an analysis of this problem, we are introducing the following (notational) explanation of (hybrid) public key encryption for confidentiality. If person Alice wants to send a confidential report M encrypted to person Bob, then:

Alice generates a random session key S;
Alice encrypts the report M with a conventional (symmetrical) cryptosystem by means of S
Alice encrypts S with the public key of Bob.

Then Alice sends the packages in b. and c. to Bob. Bob decrypts package c with his private key and in this way has S at his disposal; decrypting package b with S again gives the message M.

This set-up can now be made safe for law-abiding citizens, but not for criminals, in various ways. An obvious method is the Key Management Infrastructure proposal, a draft proposal of the American Office of the President. Here, the private key of users is deposited with a trusted third party who cooperates in investigations of law-enforcement, security or intelligence agencies if the latter have the proper court authorizations.

There are many disadvantages in this; the solution is e.g. difficult to apply internationally (for example, where does the key go?). In [VKT] even more problems are enumerated; another one is that if Alice (in the above explanation) is a suspect and Bob is not, then law-enforcement, security or intelligence agencies have to be able to make use of the private key of Bob who is not a suspect. A proposal [RH] of the University of London (Royal Holloway) is in fact based on the same idea, but makes the private key of users - by a complicated system of Key Escrow Agents - in fact reconstructable by the Key Escrow Agents in two countries independently (i.e. co-operation between the Key Escrow Agents is not required). This in principle produces an international solution (although some countries (e.g. Norway) may not *want to* be able to access the keys at all). The public encryption system which Royal Holloway uses is fairly rigid, so that in fact the session key in point a. is fixed. This is not only against the principle of pub. encryption, but also has all kinds of other annoying consequences.

A more liberal and flexible solution is that each user selects one or more Trusted Retrieval Parties (TRP), for example to be regulated by law, and that a package d. is added to the communication :
S encrypts with the public key of the selected TRPs.

These TRPs therefore act, as it were, as *virtual* addressees: they receive no messages, but should the TRPs receive them, they would then be able to decipher (and read) them. If now an authorized party intercepts the communication, then it can obtain the (unique!) session key S from block d with the aid of the TRP, and then it can then find the message M again by deciphering block b by means of S. In principle the authorized partycan also ask the TRP both to carry out the decodings and to return the message M directly on the basis of blocks a-d; however, this gives the TRP in principle a viewing of the message, which is not directly desirable.

A risk which is inherent in key recovery solutions is that if a TRP is corrupted, the (secret) information of his users can then reach unauthorized parties. A solution to this is the use of "splitting" and "sharing" techniques. This means that the private key belonging to a TRP is not in the hands of one person or organization, but is divided among several persons or organizations, say a y number, of "sub-TRPs". These parts form a "y from y splitting" scheme of the private key if:

- all y "sub-TRPs" together are capable of restoring the private key;
- fewer than y "sub-TRPs" are not capable of becoming any the wiser over the private key.

One speaks of an "x from y sharing" scheme if there is an x (smaller than y), so that:

- an arbitrary x number of "sub-TRPs" are capable of restoring the private key;
- fewer than x "sub-TRPs" are not capable of becoming any the wiser over the private key.

This proposal not only gives users a very wide choice concerning whom they want to trust (whom they take as TRP); because several TRPs (1 from the sending country; 1 from the receiving country) can be used, this in principle gives the same international advantages of the Royal Hollaway concept. However, a disadvantage is that it can easily be abused by criminals. For the sake of clarity, abuse means that people do want to make use of the system, but do not observe the rules which are made for the system (e.g. by contract). By way of illustration, if Alice just sends any data instead of block d, Alice is actually using the advantages of the system, but not the criminal "disadvantages".

Within the (patented; see US Patent Specifications 5,557,346 and 5,557,765) TIS-CKE/Recoverkey scheme [TIS] this type of unilateral abuse can be prevented by making the receiving software carry out a reconstruction check (the recipient knows S and can therefore reconstruct package d. by means of the public key of the TRP and subsequently compare the result with package d. However, this check can be bypassed by means of a (simple) operation in the software program (always put the construction check at "OK"). In other words, conspiring criminals can (easily) make use of the advantages of the system, but not of the criminal disadvantages.

In [VKT] and in particular [VT] a (partial) solution was found to this problem, with the requirement that the conspiracy fraud (as e.g. mentioned above) need not be *prevented,* but that it must actually be able to be *detected* by third parties (by means of spot checks). Third parties, also called *monitors,* in this case are considered as including (equipment of) network operators and (internet) service providers; i.e. parties who in fact already have all (encrypted) data at their disposal. However, one can also think of detection operations carried out by the control system and/or software of users themselves.

An additional requirement made of the detection is that the third parties must be able to detect this fraud without having secret information at their disposal. Therefore, the privacy of users must not be adversely affected. The requirement that certain third parties must detect fraud can be set as a legal requirement before a party is allowed to operate as a provider. What specifically has to happen about detected fraud is a question of national legislation.

More specifically, this concept - called binding cryptography - therefore consists of adding an additional block of information.

e. Binding data

With block e (and the public key of addressed and selected TRPs) it must be possible to establish whether the session key encrypted in block c is the same as that in block d, without secret information needing to be and/or being known. In a follow-up article [VT] a method is designed for binding data for a known public key encryption system: ElGamal. This article also mentions splitting and sharing techniques for ElGamal, by means of which the (already mentioned) problem of corruption of TRPs can be solved.

## 3. New Invention

This section in the description deals with a composite binding construction of three other public key systems, i.e. Diffie-Hellman [DH], RSA [RSA] and Rabin's [Rabin] variant thereon.
For these systems there is a slight deviation from the general binding proposal mentioned in point 2, in the sense that *different* public key encryption systems are used for encrypting the same message (e.g. session key). The functionality of the binding data is unchanged: without secret knowledge being necessary or becoming available, it can then be established by means of the binding data that the (various types of) encryption protect the same secret information.

### 3.1 RSA/Rabin (description)

In an RSA system [RSA] each participant selects a modulus n which is the product of two (large) prime numbers p and q, and also the public and private exponents e and d, which are related as follows: $e.d = 1$ (mod lcm $(p-1, q-1)$). Here "lcm" stands for "Least Common Multiple". The public exponent and the modulus n are made publicly known, generally combined with a certificate of authenticity by a trusted party.

If $(e, n)$ is Alice's public RSA key, then a message $0<S<n$ is encrypted by (another party) Bob as $c= S^e$ mod $n$. Alice decodes this message by calculating $c^d$ mod $n$.

In Rabin's variant [Rabin] (henceforth simply called *Rabin)* e is selected as equal to 2; a Rabin public key therefore consists only of a modulus n. A message $S<n$ is encrypted by Alice as $c = S^2$ mod $n$. A disadvantage is that decoding by Bob is no longer unique: in principle there are four possible messages S which meet $S^2 = c$ mod $n$. Within the Rabin system Bob must be able in one way or another to select the correct S from the four. Moreover, the prime numbers p and q in the case of Rabin are often selected as so-called Blum integers, because calculating square roots is then simple to achieve.

### 3.2 Diffie-Helman (description)

The Diffie-Hellman key agreement [DH] was the first practical solution for two parties for reaching a common secret key by means of an unsafe (public) channel. The system makes use of a cyclical subgroup $\Gamma$ of a (multiplicatively written) group A, in which the so-called discrete log problem cannot be solved in a practical way. Let n, a large (say, 160-bit) number, be of the order of r, and let $\gamma$ be a generator of $\Gamma$. The elements $\gamma$, $\Gamma$ and $\Delta$ (and not necessarily n) are given to all participants by an issuing party (IP). Various choices are possible for the groups $\Gamma$, $\Delta$, but in a typical example $\Gamma = \Delta$, and $\Delta$ is the multiplicative group of a finite element or the group of points on an elliptical curve over a finite field.

If in the basic version of the protocol two participating parties A and B wish to agree upon a secret key, this is what they do:

1. A generates an arbitrary number ka smaller than n (or an upper bound thereof) and sends $z_A = \gamma^{ka}$ to B.
2. B generates an arbitrary number kb smaller than n (or an upper bound thereof) and sends $z_B = \gamma^{kb}$ to A.
3. A receives $z_B$ and calculates the common secret key as $(z_B)^{ka}$.
4. B receives $z_A$ and calculates the common secret key as $(z_A)^{kb}$.

This basic version of the protocol protects only the confidentiality of the common key, and not the authenticity of the parties. There are various variants of the protocol which add authenticity to the basic protocol. For example, all participating parties could be given fixed public keys which are certified by a (trusted) third party. Better solutions are found in the Station-to-Station [STS] and MTI [MTI] variants of Diffie-Hellman.

### 3.3 McCurley's ElGamal variant (description)

The ElGamal public key system [EIG], like Diffie-Hellman, makes use of a cyclic subgroup G of a (multiplicatively written) group H, in which the so-called discrete log problem cannot be solved in a practical way. Various choices are possible for the groups G, H, but in a typical example G=H and H is the multiplicative group of a finite element or the group of points on an elliptical curve over a finite field.

The elements g, G and H are made publicly known. In order to participate in the system, a participant selects his own private key x (a number smaller than the order of g or an upper bound thereof) and makes his public key $y = g^x$ publicly known, combined with a certificate of authenticity or otherwise.

If y is Alice's public ElGamal key, then a message S, an element from H, is encrypted by (another party) Bob by first selecting an arbitrary k (a number smaller than the order of g or an upper bound thereof) and calculating the following: $(t, u):= (g^k, S.y^k)$. Alice decrypts this message by calculating $u/t^x$.

In McCurley's variant of ElGamal [McC] the multiplicative group of Z/nZ is taken as H, in which case n, as in the case of RSA, is the product of two (secret) prime numbers p and q. A group produced by an arbitrary element g from the multiplicative group Z/nZ can be taken as group G. In [McC] special prime numbers are selected and g is taken equal to 16. The reason for this is that in this selection McCurley can prove that someone who can break this form of ElGamal is also capable of factorizing the modulus n.

In fact, this selection of the prime numbers p, q and the generator g is not necessary; we shall also consider arbitrary prime numbers p, q and an arbitrary g in the multiplicative group of Z/nZ (in which therefore $n = p.q$).

### 3.4 Multi Recoverable RSA/Rabin (invention)

The RSA/Rabin encryption of the same secret S with several can be unsecure, cf. [Has]. That is also why we choose to make the encrypted copies of S intended for the TRPs with a system other than RSA, namely McCurley's variant of ElGamal, in which the RSA/Rabin modulus n used by the user is actually used and a generator g is selected in Z/nZ. So if m TRPs are involved, their private keys are of form x1, x2, ...., xm (numbers < n) and their public keys are of the form $y_1 = g^{x1}$, $y_2 = g^{x2},..., y_m = g^{xm}$.

Therefore, if $R = S^e$ mod n is the encryption with a public key (e, n) of a user, then the copies for the TRPs are of the form: $(A_1, B_1 ):= (g^k, S.(y_1)^k)$, $(A_2, B_2):= (g^k, S.(y_2)^k)$, $(A_3, B_3) = (g^k, {}^{S}.(y3)^k)$, ..., $(A_m, B_m) = (g^k, S.(y_m)^k)$ (all modulo n). Note that in the case of all these m encryptions the same random k is selected smaller than n by the user.

In other words, the message mentioned in Section 2 has the following form:

E. Data encrypted with S

A. $R = S^e \bmod n$;

B. $(A_1, B_1) := (g^k, S.(y_1)^k)$, $(A_2, B_2) := (g^k, S.(y_2)^k)$, $(A_3, B_3) = (g^k, S.(y_3)^k)$, ..., $(A_m, B_m) = (g^k, S.(y_m)^k)$, all modulo n.

If the selected session key S is (arbitrarily) selected in the group G (instead of the larger group H), i.e. S is of the form $g^z \bmod n$ with $z < n$ arbitrary, then it can be proved that the breaking of RSA with the ElGamal/McCurley recovery fields is just as difficult as without these fields. From (formal) security considerations, it can therefore be decided to select S in group G.

The binding data constructed by us will prove that $((A_i)^e, (B_i)^e)$ relate to an ElGamal encryption of S relative to the public key $y_i$; this is sufficient to prove that block A and B contain the same S. This is equivalent to proving that for each i equal to 1,2,..., m the logarithm of expression $(A_i)^e \bmod n$ relative to the base g modulo n is the same as the logarithm of the expression $(B_i)^e \bmod n$ divided by R modulo n relative to the base $y_i$. The latter is simple to achieve with a variant on a non-interactive protocol such as described in [VT]. We shall illustrate this for m=1; the general case follows in an analogous way. In the case m=1 binding data must show that one k exists, so that:

$$a = g^k = (A_1)^e \bmod n$$

$$b = (y_1)^k = (B_1)^e / R \bmod n \qquad (*)$$

This goes as follows: first of all, a safety parameter v is fixed: a chance of $1/2^v$ that the binding data gives an incorrect conclusion is considered acceptable. The safety parameter will, for example, lie around 80 (bit). In addition, a one-way secure hash function is fixed, the number of output bits of which is sufficiently great (say, 160).
Subsequently:

1. The sending conversation partner for this purpose generates an arbitrary I smaller than n and constructs: $c = g^I \bmod n$ and $d = (y_i)^I \bmod n$, which are added to the binding data.
2. The sending conversation partner calculates, in a publicly known manner, a one-way-secure hash, called w, of c and d and possibly other prescribed information which is sent at the same time (e.g. a and b), possibly as part of the binding data.
3. The sending conversation partner calculates $z = w.k + 1$ and looks whether this number still gives adequate uncertainty about the k and I, in other words whether the number of solutions k,I on the basis of the equation $z = w.k + 1$ is sufficiently great (at least $>2^v$) to make "guessing" k,I virtually impossible. If this is the case, the sending conversation partner adds z to the binding data; otherwise he starts again at step 1 of the method.

A monitor is now able, on the basis of the binding data (which contains c, d and z), to check as follows that equivalence (*) is fulfilled. The monitor (re)calculates - in the prescribed manner - the one-way-secure hash, called w, of c and d and possibly other information and checks that:

$$g^z = a^w . c \text{ and } y^z = b^w . d. \qquad (**)$$

If this is the case, then the monitor accepts that the encrypted RSA key in package R is the same as in $(A_1, B_1)$, otherwise he does not accept it.

The binding data constructed in the above method can be reduced considerably by applying the "Fiat-Shamir" heuristic. In this case the binding data contains the hash w instead of the c and d.; the binding data thus contains z and w. The monitor calculates elements c and d on the basis of equivalence (**), calculates - in the prescribed manner - on the basis of this c and d and possibly other information the one-way-secure hash w', and compares this with the hash w sent along with it. If w and w' are the same, then the monitor accepts that the encrypted RSA key in package R is the same as in $(A_1, B_1)$, otherwise he does not accept it.

We should further like to point out that the splitting and sharing techniques mentioned in [VT] for ElGamal are also applicable to McCurley's variant of ElGamal, and thus in particular to the abovementioned recoverable RSA.

### 3.5 Single recoverable Diffie-Hellman (invention)

This binding method for Diffie-Hellman systems consists of selecting the generator g used here (and produced cyclical group $\Gamma$ and surrounding group $\Delta$) in such a way that the order thereof is equal to an RSA modulus n, the product of two (large) secret prime numbers p and q. In the single case (where only one TRP is involved) it is assumed that the prime numbers p and q are known to the TRP (or parts in the case of several sub-TRPs where splitting or sharing techniques have been used for the prime numbers p and q), and that n=p.q is publicly known (e.g. published).

Of course, r must also be selected in such a way that the discrete log problem in $\Gamma$ cannot be solved in a practical way. There are countless ways in which $\gamma$, $\Gamma$ and $\Delta$ can be selected. For example, a prime number P of the form P=s.n + 1 could be selected, where s is a small number. The element $\gamma$ (not equal to 1 mod P) would then have to be selected in such a way that $\gamma^n = 1 \bmod P$.

In order to make Diffie-Hellman systems of this type recoverable, we propose that if one party is sending a typical Diffie-Hellman message of the type $\gamma S$ mod P to a conversation partner (where S is known only to the sending party), recovery is constructed by accompanying this message by a Rabin encryption modulo n, i.e. $S^2$ mod n. In other words, a typical Recoverable Diffie-Hellman message has the form $(H,R) = (\gamma^S$ mod P , $S^2$ mod n).

Moreover, the recovery field $S^2$ mod n need not in principle be sent by both sending partners: it is sufficient if one of the two does it. This applies fully to the earlier mentioned STS and MTI protocols, which are based on Diffie-Hellman.

The binding data constructed by us will now prove that:
R is the square of the logarithm of the above mentioned block H relative to base (generator) $\gamma$. (***).

For this a one-way-secure hash function is first established, the number of output bits of which is sufficiently great (say, 160). Then:

1. the sending conversation partner generates an arbitrary number T smaller than n, calculates T2 = $T^2$ mod n and calculates $a_1 = \gamma^T$ and $a_2 = \gamma^{T2}$, which are added to the binding data;
2. the sending conversation partner calculates, in a publicly known manner, a one-way-secure hash, called w, from $a_1$ and $a_2$ and possibly other prescribed information sent at the same time, possibly as part of the binding data;
3. the sending conversation partner calculates z = w.S + T mod n and adds this to the binding data;

a monitor is now able, on the basis of this binding data, to check as follows that assertion (***) is true:

4. the monitor (re)calculates the one-way-secure hash, called w, from $a_1$ and $a_2$ and possibly other prescribed information, calculates $H_2 \gamma^R$, $w^2 = w^2$ mod n and checks that:
$y^z = H^w.a_1$ and $(H^{-w}.a_1)^z = (H_2)^{-w2} . a_2$; if it does, then he accepts that assertion (***) is correct, otherwise he does not accept it.

The binding data constructed in the above method can be reduced considerably by applying the "Fiat-Shamir" heuristic. In this case the binding data consists of (only) z and w; the monitor calculates elements $a_1$ and $a_2$ on the basis of the equivalence mentioned in the above point 4, and calculates - in the prescribed manner - on the basis of this $a_1$ and $a_2$ and possibly other information the one-way-secure hash w', and compares this with the hash w sent along with it. If w and w' are the same, then the monitor accepts that the encrypted RSA key in package R is the same as in package H, otherwise he does not accept it.

### 3.6 Multi Recoverable Diffie-Hellman (invention)

Making Diffie-Hellman multiply recoverable consists simply of combining the technique mentioned in point 3.5 with the technique mentioned in point 3.4, where (inter alia) Rabin encryption is made multiply recoverable. It is then obvious to destroy the private Rabin key (i.e. the prime numbers p and q whose product forms the modulus n): the TRPs all have at their disposal only ElGamal private keys. In this way one cyclical subgroup G, surrounding group H and the modulus n can be used to make Diffie-Hellman exchanges possible; different TRPs can always be selected (on the basis of a selected ElGamal key of a TRP). This is a convenient feature in an international context. By way of illustration, if American Alice wants to have a Diffie-Hellman exchange with British Bob, then she encloses an encrypted session key (plus binding data) for a British TRP, encrypted with his public ElGamal key; if Alice wants to have a Diffie-Hellman exchange with French Frank, then she encloses an encrypted session key (plus binding data) for a French TRP, encrypted with his public ElGamal key. In both cases she can use the same parameters (g, G, H, n).

### References

[Clip] Computer Systems Laboratory, National Institute of Standards and Technology, *Escrowed Encryption Standard (EES),* Federal Information Processing Standards Publication, FIPS PUB 185, Feb. 9, 1994.

[DH] W. Diffie, M.E. Hellman, *New directions in cryptography,* IEEE Transactions on Information Theory 22, 1976, pp 644-654.

[EIG] T. ElGamal, A *Public Key Cryptosystem and a Signature scheme Based on Discrete Logarithms,* IEEE Transactions on Information Theory 31(4), 1985, pp 469-472.

[Has] J. Hastad, *On Using RSA with Low Exponent in a Public Key Network,* Advances in Cryptology -CRYPTO '85 Proceedings, Springer-Verlag, 1993, pp. 403-405.

[KM] Interagency Working Group on Cryptography Policy, *Enabling Privacy, Commerce, Security and Public Safety in the Global Information Infrastructure,* 17 May 1996, see http://www.cdt.org/crypto/clipper_III.

[McC] K. McCurley, *A Key Distribution System Equivalent to Factoring,* J. Cryptology, 1 (1988), pp. 95-105.

[MTI] T. Matsumoto, Y. Takashima, H. Imai, *On Seeking smart public-key distribution systems,* The Transactions of the IECE of Japan, E69, (1986), 99-106.

[Rabin] M.O. Rabin, *Digitalized signatures and public-key functions as intractable as factorization,* MIT/LCS/TR-212, MIT Laboratory for Computer Science, 1979.

[RH] N. Jefferies, C. Mitchell, M. Walker, *A Proposed Architecture for Trusted Third Party Services,* Cryptography: Policy and Algorithms, Proceedings of the conference, Springer-Verlag (LNCS 1029), 1996, pp. 98-104.

[RSA] R.L. Rivest, A. Shamir, and L. Adleman, *A method for obtaining digital and public key Cryptosystems,* Commun. ACM, vol. 21, No. 2, pp. 158-164, Feb. 1978.

[STS] W. Diffie, P.C. van Oorschot, M.J. Wiener, *Authentication an [sic] Authenticated key exchanges,* Designs, Codes and Cryptography, 2, (1992), 107-125.

[TIS] D.M. Balenson, C.M. Ellison, S.B. Lipner, S. T. Walker (TIS Inc.), *A New Approach to Software Key EscrowEncryption,* in: L.J. Hoffmann (ed.), Building in Big Brother (Springer, New York, 1996), pp. 180-207. See also http://www.tis.com.

[VT] E.R. Verheul, H.C.A. van Tilborg, *Binding ElGamal: a fraud-detectable alternative to keyescrow proposals,* EuroCrypt97 proceedings, 1997.

[VKT] E.R. Verheul, B.-J. Koops, H.C.A. van Tilborg, *Binding Cryptography. A fraud-detectable alternative to key-escrow solutions,* Computer Law and Security Report, January-February 1997, pp. 3-14

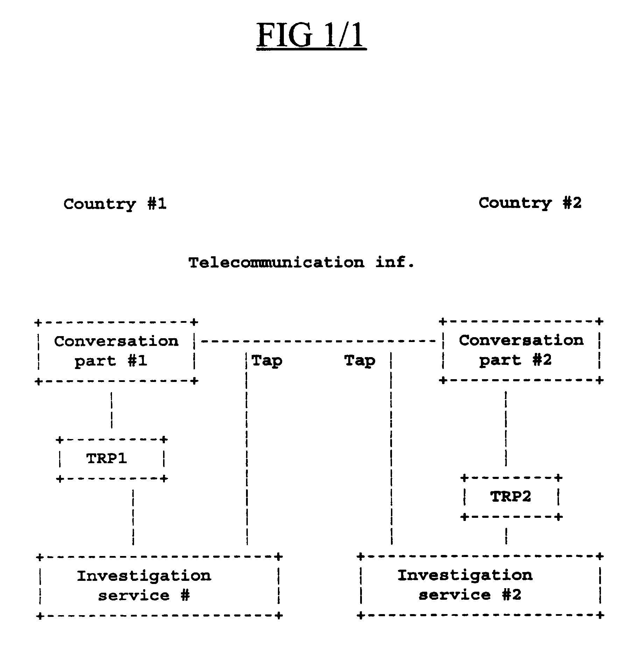

**Claims**

1. A method for key recovery cryptography to be used in a system consisting of:

   - two conversation partners (from possibly different countries) who are exchanging secret information in encrypted form with each other by way of the public telecommunications infrastructure;
   - one or more legitimate co-listeners possibly present (for example,a government agency, or an employer of one of the conversation partners), who do have the enciphered information at their disposal, but are not able to decipher it;
   - one or more trusted parties (known as Trusted Recovery Parties) in principle different from the conversation partners, who act as virtual conversation partners, who can decipher the information, but who do not have the enciphered information at their disposal;
   - one or more monitors possibly present for monitoring the exchange between the conversation partners (for example, (an apparatus of) one of the conversation partners, a PTT or an employer of the conversation partners),

in which the conversation partners as part of the exchange also make the same secret information available to the abovementioned co-listener if the latter acquires cooperation (simultaneously, or with some delay) from one of the TRPs (or several in the event of splitting or sharing techniques being used), and in the course of which the conversation partners also send additional information at the same time, known as binding data, by means of which the monitor can check that said making of information available can also be carried out properly, without the monitor having to have at his disposal secret information; characteristic of the method is that it relates to an exchange in which the secret information, known as S, is encrypted as:

A. R[S], an RSA encryption with a public RSA key with parameters (e, n);
B $_1$[S], M$_2$[S],...,M$_m$[S], a series of ElGamal encryptions in the multiplicative groupof Z/nZ generated by a publicly known element g;

or as

A. R[S], an RSA encryption according to Rabin's variant (e=2) with a public RSA key with parameter n;
B. M$_1$[S], M$_2$[S],...,M$_m$[S], a series of ElGamal encryptions in the multiplicative group of Z/nZ generated by a publicly known element g;

DH[S], a publicly known element from a subgroup $\Gamma$ (of a surrounding group $\Delta$) up to the power of S, in which for the following applies: $\gamma^n = 1$, in which the private keys - but not necessarily all of them - belonging to blocks A and B are known either to the conversation partners or to the TRPs (or may become known in the event of splitting or sharing techniques being used): in the first case the private RSA key will, for example, be known to the receiving party and the private ElGamal keys (or parts thereof) to a number of TRPs, while in the second case, for example, nobody will have at his disposal the private Rabin key, and only the TRPs will have at their disposal the private ElGamal keys (or parts thereof).

2. If the encryptions mentioned under Claim 1 are written out as:

A. R = S$^e$ mod n;
B. (A$_1$, B$_1$):= (g$^k$, S.(y$_1$)$^k$), (A$_2$, B$_2$):= (g$^k$, S.(y$_2$)$^k$), (A$_3$, B$_3$) = (g$^k$, S.(y$_3$)$^k$), ..., (A$_m$, B$_m$) = (g$^k$, S.(y$_m$)$^k$), all modulo n, and in which y$_1$,y$_2$, ... y$_m$ are the corresponding ElGamal keys;

or if

A. $R = S^2 \bmod n$;

B. $(A_1, B_1) := (g^k, S.(y_1)^k)$, $(A_2, B_2) := (g^k, S.(y_2)^k)$, $(A_3, B_3) = (g^k, S.(y_3)^k)$, ..., $(A_m, B_m) = (g^k, S.(y_m)^k)$, all modulo n;

C. $H_1 = \gamma^s$;

then the binding data mentioned in Claim 1 serves to prove in the first case that for each i equal to 1,2, ..., m the expressions $((A_i)^e, (B_i)^e)$ relate to an ElGamal encryption of S relative to the public key $y_i$; and in the second case that the expressions $((A_i)^2, (B_i)^2)$ relate to an ElGamal encryption of S relative to the public key $y_i$, and also that R modulo n is the square of the $\log \gamma (H_1)$.

3. The way in which the binding data mentioned in Claim 1 succeeds in proving that for each i equal to 1, 2, ..., m the expressions $((A_i)^e, (B_i)^e)$ relate to an ElGamal encryption of S relative to the public key $y_i$, as mentioned in Claim 2, consists of proving that for each i equal to 1, 2, ..., m the logarithm of expression $(A_i)^e$ relative to the base g modulo n is the same as the logarithm of the expression $(B_i)^e$ divided by R modulo n relative to the base $y_i$; the way in which the binding data mentioned in Claim 1 succeeds in proving that for each i equal to 1, 2, ..., m the expressions $((A_i)^2, (B_1)^2)$ relate to an ElGamal encryption of S relative to the public key $y_i$ as mentioned in Claim 2, consists of proving that for each i equal to 1, 2, ..., m the logarithm of expression $(A_i)^2$ relative to the base g modulo n is the same as the logarithm of the expression $(B_i)^2$ divided by R modulo n relative to the base $(y_i)$.

4. A method in which the binding data mentioned in Claim 1 serves to prove that R modulo n is the square of the $\log_\gamma (H_1)$, as mentioned in Claim 2, as follows:

   - the sending conversation partner generates an arbitrary T smaller than n, calculates $T2 = T^2 \bmod n$ and calculates $a_1 = \gamma^T$ and $a_2 = \gamma^{T2}$, which are added to the binding data;
   - the sending conversation partner calculates, in a publicly known manner, a one-way-secure hash, called w, of $a_1$ and $a_2$ and possibly other information which is sent at the same time, possibly as part of the binding data;
   - the sending conversation partner calculates $z = w.S + T \bmod n$ and adds this to the binding data;
   a monitor, as mentioned in Claim 1, is now able, on the basis of the binding data, to check as follows that R modulo n is the square of the log $\gamma(H_1)$, as mentioned in Claim 2:

   - the monitor calculates the one-way-secure hash, called w, from $a_1$ and $a_2$ and possibly oth-

er information, calculates $H_2 = \gamma^R$, $w2 = w^2 \bmod n$ and checks that:
$\gamma^z = (H_1)^w.a_1$ and $((H_1)^{-w}.a_1)^z = (H_2)^{w2} . a_2$; if it does, then he accepts that R modulo n is the square of the log $\gamma (H_1)$, as mentioned in Claim 2; if this is not so, then he does not accept it.

5. A (relatively) safe recovery of RSA/Rabin is constructed if the session key S, as mentioned, inter alia, in Claim 1 and 2, is (arbitrarily) selected in the group produced by g, i.e. S is of the form $g^z \bmod n$, with z smaller than n arbitrarily. In this case it can be proved that breaking RSA/Rabin is just as difficult with recovery as without recovery.

6. From the method which is explained in Claim 4, an equivalent can be constructed by reversing the roles of $H_1$ (or $H_2$) and $a_1$ (or $a_2$), selecting as z S + w.T and by adapting the checking steps in 4d.

7. The binding data constructed in the methods from Claims 4 and 5 can be reduced by using the Fiat-Shamir heuristic (see end of 3.5 from the description).

# FIG 1/1

Country #1                                          Country #2

Telecommunication inf.

```
+----------------+                              +----------------+
| Conversation   |------------------------------| Conversation   |
|    part #1     |         |Tap      Tap |       |    part #2     |
+----------------+         |             |       +----------------+
        |                  |             |               |
        |                  |             |               |
        |                  |             |               |
   +----------+            |             |               |
   |  TRP1    |            |             |          +---------+
   +----------+            |             |          |  TRP2   |
        |                  |             |          +---------+
        |                  |             |               |
        |                  |             |               |
+-----------------------+  |    +-----------------------------+
|   Investigation       |  |    |   Investigation             |
|    service #          |  |    |    service #2               |
+-----------------------+  |    +-----------------------------+
```